# NEUE EUROPÄISCHE PATENTSCHRIFT

(11) **EP 0 829 335 B2**
(45) Veröffentlichungstag und Bekanntmachung des Hinweises auf die Entscheidung über den Einspruch: **29.01.2003**
(45) Hinweis auf die Patenterteilung: 01.03.2000
(21) Anmeldenummer: 97810481.8
(22) Anmeldetag: 15.07.1997
(51) Int. Cl.: B28B 11/08, B28B 11/16, B23D 45/14, B23D 45/10

(54) **Verfahren und Vorrichtung zur Herstellung von angefasten Formlingen aus einem Tonstrangstück**
Process and device for making chamfered articles from an extruded clay strand
Procédé et dispositif pour la fabrication d'éléments avec chanfreins à partir d'un boudin d'argile extrudée

(30) Priorität: 09.08.1996 CH 195996
(43) Veröffentlichungstag der Anmeldung: 18.03.1998
(73) Patentinhaber: Freymatic AG, 7012 Felsberg (CH)
(72) Erfinder: Borgmann, Heinz, 7013 Domat/Ems (CH)
(74) Vertreter: Riederer, Conrad A., Dr.

(56) Entgegenhaltungen:
- CH-A- 684 066
- DE-A- 1 909 193
- GB-A- 1 215 344
- US-A- 3 268 637
- US-A- 4 969 380

## Beschreibung

Die Erfindung betrifft ein Verfahren und eine Vorrichtung zur Herstellung von angefasten Formlingen aus einem Tonstrangstück.

Mit der Anfasung eines Formlings soll erreicht werden, dass die Kanten des Formlings nicht scharfkantig sind. Solche scharfen Kanten sind nicht nur bei der Verarbeitung des gebrannten Steins unangenehm für die Hände dessen, der die Steine fassen muss.Sie sind auch sehr leicht verletzbar, wobei bei einer Verletzung der Kante in der Regel auch die Sichtfläche des Steins verletzt wird. Die Anfasung verhindert auch, dass beim Schneiden des Formlings entstehende Brauen über die Abmessungen des Formlings hinausstehen. Solche überstehenden Brauen können schon beim Stapeln der Formlinge zu Schäden an den darunter- oder darüberliegenden Formlingen führen.

Eine Methode, bei der durch Abtragen von Material Ziegelsteine mit einer Blendfuge versehen werden, wird in der Patentschrift GB-A-1 215 344 beschrieben. Praktisch gleichzeitig mit dem Führen der Tonstrangstücke durch eine Harfe von Schneiddrähten werden diese Tonstrangstücke unter Paaren von drehbaren Schlitzscheiben hindurchgeschoben. Die Schlitzscheiben formen dabei durch Materialverdrängung je zwei parallele Schlitze senkrecht in die Sichtfläche des Tonstrangstückes. Eine schräg ausgeformte Verdickung der Schlitzscheiben wird gleichzeitig gegen die Kanten beidseitig der Blendfuge gedrückt, um eine Anfasung der Blendkanten zu erreichen. Zwischen den parallelen Schlitzen wird gleich anschliessend jeweils der Ton mit einem Meissel ausgehoben. Die so hergestellten Blendfugen weisen parallele Fugenwände und einen zu der bearbeiteten Oberfläche parallelen Fugengrund auf. Beim Austritt aus dem Tonstrangstück hinterlässt der Meissel eine Braue oder einen Grat. Zwischen zwei Blendfugen wird das Tonstrangstück mit Drähten im gleichen Arbeitsgang in Formlinge zerschnitten, so dass ein Formling durch eine Blendfuge in zwei Blendsteine unterteilt ist. Diese Methode und diese Vorrichtung zur Herstellung von Blendfugen sind ungeeignet für die Herstellung von gefasten Ziegelsteinen.

In der Patentschrift US-A-3,461,196 wird eine Vorrichtung zur Herstellung von angefasten Formlingen beschrieben, die zwei in einem Rahmen angeordnete Reihen von Profilrollen aufweist. Des weiteren besitzt der Rahmen Schneiddrähte, um durch Schneiden eines Tonstrangstücks Formlinge zu bilden. Zu diesem Zweck ist der Rahmen feststehend über einem Hebetisch angeordnet, und zwar in solcher Höhe, dass das von einem Auflagetisch mittels eines Schiebers quer auf den Hebetisch geschobene Tonstrangstück mittels einer ersten Reihe der Profilrollen an seiner Oberseite profiliert wird. Der Tonstrang wird dann genau unterhalb des Rahmens positioniert. Beim Anheben des Hebetischs profilieren die beiden Reihen der Profilrollen die Seiten des Tonstrangs. Hat der Hebetisch seine obere, über dem Schneidrahmen liegende Stellung erreicht, so dient ein weiterer Schieber dazu, den geschnittenen Tonstrang quer zu seiner Längsrichtung vom Hebetisch auf einen Abförderer zu schieben.

Die DE-A-28 32 187 beschreibt eine Vorrichtung zum Einformen von Rillen in einen Tonstrang. Diese Vorrichtung weist zwei Reihen von Profilrollen zum Einformen der Rillen auf. Diese sind aus einer ersten Stellung in eine zweite Stellung und umgekehrt auf- und abbewegbar. Während der Bewegung aus der ersten in die zweite Stellung wird die erste Seitenfläche des Tonstrangstücks gekerbt. Während der Bewegung des Tonstrangstücks in waagrechter Richtung werden die Oberund die Unterseite des Tonstrangstücks gekerbt und während der Abwärtsbewegung aus der zweiten Stellung in die erste Stellung wird die zweite Seitenfläche gekerbt.

Die Vorrichtung gemäss der DE-C-33 11 541 unterscheidet sich von der vorher beschriebenen Vorrichtung im wesentlichen dadurch, dass die Seitenflächen des Tonstrangstücks mittels Kerbrollen gleichzeitig gekerbt werden können.

In der Patentschrift CH-A-684 066 wird darauf hingewiesen, dass beispielsweise die aus der DE-A-28 32 167 und der DE-B-21 20 139 bekannten Vorrichtungen zum Anbringen von Profilnuten den Nachteil besitzen, dass zumindest die Profilnuten, deren Auslaufenden verfahrensmässig gesehen zusammenfallen, einen vorstehenden Grat aufweisen, der störend ist. Um dies zu vermeiden, wird vorgeschlagen, mindestens bei einem ersten Satz Profilrollen mit radial vorstehenden Nasen zu verwenden und so anzuordnen, dass sie den Materialstrang am Ende der Profilnuten mit einer Kerbe versehen, die bei der weiteren Profilierung des Materialstrangs vorgeschobenes Material aufnehmen kann, welches sonst einen Grat bilden würde.

Allen diesen Vorrichtungen ist gemeinsam, dass sie die die Anfasung bildenden Nuten oder Kerben durch Materialverdrängung erzeugen. Auf dem Markt werden ferner Maschinen angeboten, welche Nuten durch Einpressen einer Schlagleiste in das Tonstrangstück erzeugen. Die Herstellung von Kerben und Nuten durch Materialverdrängung hat aber nicht nur den Nachteil, dass die Profilnuten, deren Auslaufenden verfahrensmässig gesehen zusammenfallen, einen vorstehenden Grat aufweisen, sondern auch dass der Nutenrand aufgewölbt wird. Dies ist insbesondere bei Pflasterklinkern unerwünscht. Ein weiterer Nachteil der bekannten Vorrichtungen besteht darin, dass sie sehr starr gebaut werden müssen, um die hohen Drücke aufzunehmen, die bei der Bearbeitung der Tonstrangstücke mit Profilrollen entstehen. Dies trifft besonders für sogenannte steifverpresste Tonstrangstücke zu, also solche, die mit geringem Wassergehalt hergestellt wurden, damit für das Trocknen weniger Energie benötigt wird.

Aus der DE-A 42 27 760 ist ein Verfahren und eine Vorrichtung zur Herstellung eines Verblendsteins aus Porenbeton bekannt. Ein Porenbetonblock mit mehrfacher Dicke des fertigen Verblendsteins wird umlaufend mit wenigstens zwei Fasen versehen. Die Fasen können einander zugewandt sein und so eine V-förmige Nut bilden. In einer Ebene parallel zur Grundfläche wird der Block anschliessend in der Dicke geteilt. Dadurch entstehen wenigstens zwei angefaste Verblendsteine höchstens halber Dicke des Ausgangsblockes. Die Vorrichtung zur Herstellung der Verblendsteine besitzt dazu einen ersten Förderbahnabschnitt, auf dem der Block zwischen zwei gegenüberliegenden Fasenfräsers hindurchgeführt wird, welche zwei gegenüberliegende Seiten des Blockes fasen. Auf einem quer zum ersten Abschnitt verlaufenden zweiten Förderbahnabschnitt wird der Block zwischen zwei die anderen beiden Seiten des Blockes fasenden Fräsern hindurchgeführt. In einem anschliessenden Abschnitt wird der Porenbeton-Block in der Dicke zerteilt. Das Sägen und Fräsen von hartem Porenbeton gehört zu den handwerklichen Massnahmen, die der Fachmann zu tun pflegt. Das Verfahren kann aber nicht auf die Herstellung von relativ weichen Formlingen aus einem Tonstrangstück übertragen werden, da der abgetragene Ton die Fräserköpfe verstopfen und verkleben würde.

Es ist daher Aufgabe der vorliegenden Erfindung, ein Verfahren und eine Vorrichtung zu schaffen, welche die genannten Nachteile vermeiden.

Erfindungsgemäss wird dies dadurch erreicht, dass die V-förmigen Nuten, deren Wandungen nach dem Schneiden des Tonstrangstücks die Anfasung der Formlinge darstellen, durch Materialabtragung mittels Schneiden mit in V-Stellung zueinander angeordneten, drehbaren runden Messerscheiben gebildet werden. Das Herstellen von Anfasungen und Nuten durch Materialabtragung hat den Vorteil, dass die Bildung von Aufwölbungen an den Nutenrändern vermieden wird.

Zweckmässigerweise erfolgt die Materialabtragung durch Schneiden. Versuche haben jedoch gezeigt, dass je nach der Herkunft und der Feuchtigkeit des Tonmaterials dieses sich manchmal schlecht zum Ausheben von Nuten mit Messerklingen eignet. Es wurde aber überraschenderweise gefunden, dass unterschiedlichste Tonmaterialien mit einer drehbaren runden Messerscheibe angefast werden können, und dass die so erzeugten Fasen von guter Qualität sind. Es konnte nicht mit letzter Sicherheit geklärt werden, warum sich solche Messerscheiben derart gut für verschiedene Tonarten eignen. Wesentlich scheint der Umstand zu sein, dass eine Messerscheibe eine relativ grosse Schneidfläche aufweist, und dass beim Schneiden das abgeschnittene Material und die Scheibe verschiedene Bewegungsrichtungen aufweisen, wobei die Relativbewegung zwischen Material und Messerscheibe an verschiedenen Punkten der Messerscheibe unterschiedlich gross ist.

Weitere vorteilhafte Ausbildungen des Verfahrens ergeben sich aus den Unteransprüchen 2 bis 4.

Die Erfindung betrifft auch eine Vorrichtung zur Herstellung von angefasten Formlingen aus einem Tonsträngstück, mit Mitteln zur Bildung von Nuten, insbesondere V-förmigen Nuten, und einer Trennvorrichtung zum Zerlegen des Tonstrangstücks in Formlinge. Diese Vorrichtung ist erfindungsgemäss dadurch gekennzeichnet, dass zur Bildung der Nuten mindestens eine Abtragvorrichtung mit mehreren Köpfen zum Abtragen von Ton vorgesehen ist, wobeo jeder Kopf zwei in V-Stellung nebeneinander angeordnete, drehbare runde Schneidscheiben aufweist. Diese Schneidscheiben sind nebeneinander angeordnet, damit sich die Abfallstücke besser von den Schneidscheiben lösen.

Die Vorrichtung kann relativ leicht gebaut werden, weil deren Gestell - im Gegensatz zu Vorrichtungen, die mit hohen Anpressdrücken arbeitende Profilrollen aufweisen - keine grossen Kräfte aufnehmen muss.

Eine vorteilhafte Ausführungsform der Vorrichtung ist dadurch gekennzeichnet, dass für jede Seite des Tonstrangstücks eine Abtragvorrichtung mit mehreren Köpfen vorgesehen ist, und dass mindestens eine Fördervorrichtung vorgesehen ist, um zum Ausheben der Nuten eine Relativbewegung zwischen Abtrageinrichtung und Tonstrangstück in Richtung quer zum Tonstrangstück zu erzeugen. Es ist möglich, eine erste Fördervorrichtung vorzusehen, um das Tonstrangstück in praktisch horizontaler Richtung zwischen einem ersten Paar von Abtrageinrichtungen hindurchzuführen, und eine zweite Fördereinrichtung, um das Tonstrangstück in praktisch vertikaler Richtung zwischen einem zweiten Paar von Abtrageinrichtungen hindurchzuführen und mittels einer Trennvorrichtung in Formlinge zu zerlegen.

Ausführungsbeispiele der Erfindung werden unter Bezugnahme auf die Zeichnungen beschrieben. Es zeigt:
- Fig. 1: eine schematische Darstellung der Vorrichtung zur Herstellung von angefasten Formlingen aus einem Tonstrangstück,
- Fig. 2: einen Kopf zur Bildung der Nut mit zwei in V-Stellung zueinander angeordneten drehbaren runden Schneidscheiben,
- Fig. 3: eine Abtrageinrichtung mit einer Vielzahl von runde Schneidscheiben aufweisenden Köpfen, und

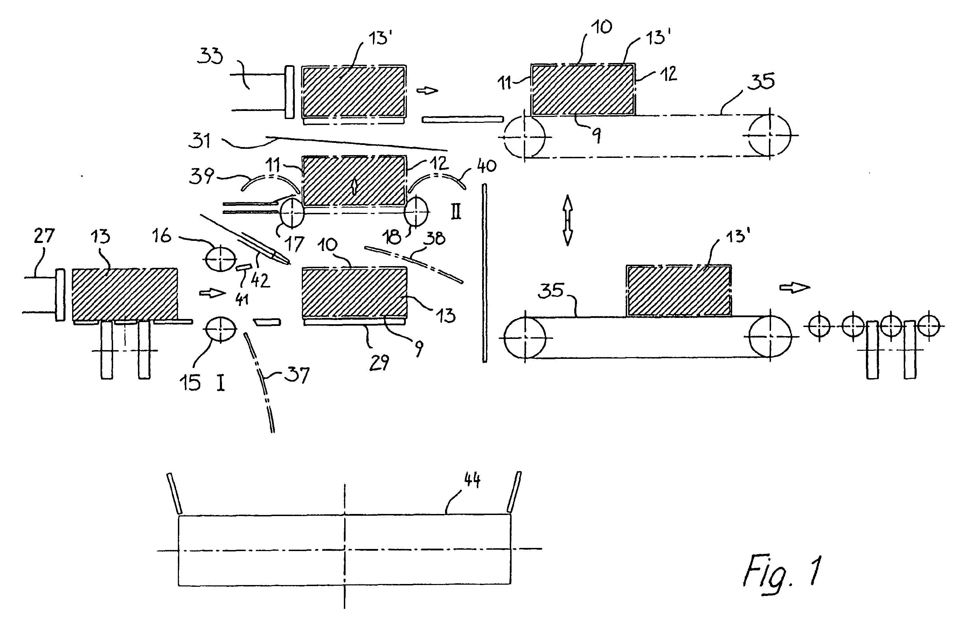

Die Figuren 1 bis 3 zeigen eine Vorrichtung zur Anbringung von Nuten 9,10,11,12 an einem Tonstrangstück 13. Die Vorrichtung enthält ein erstes Paar 1 und ein zweites Paar II von Abtrageinrichtungen. Das erste Paar I enthält die Abtrageinrichtungen 15,16. Das zweite Paar enthält die Abtrageinrichtungen 17,18. Alle diese Abtrageinrichtungen können gleich ausgebildet sein.

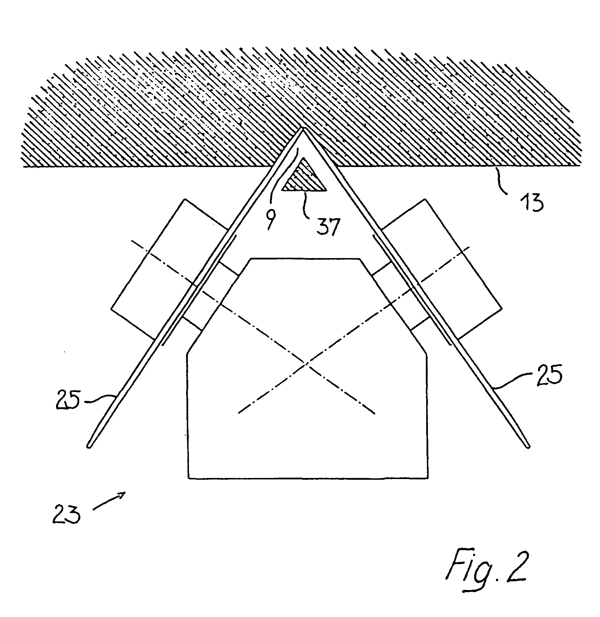

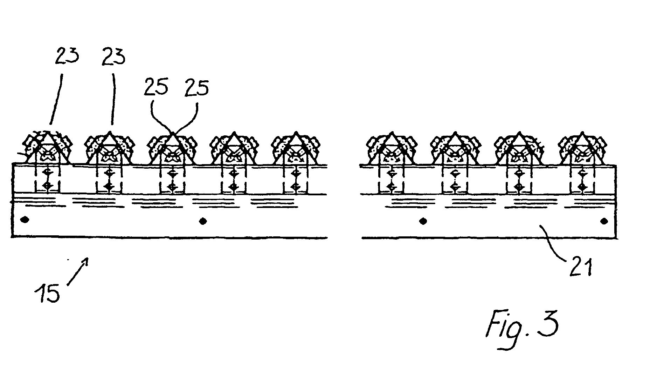

Wie Fig. 3 zeigt, besteht eine Abtrageinrichtung 15-18 im wesentlichen aus einem Balken 21, welcher eine Vielzahl von in Abstand voneinander angeordneten Köpfen 23 aufweist. Wie insbesondere aus Fig. 2 ersichtlich ist, weist jeder Kopf 23 zwei in V-Stellung zueinander angeordnete drehbare runde Schneidscheiben 25 auf. Diese bestehen beispielsweise aus einem Metall, z. B. gehärteter Stahl, allenfalls mit einer Hartmetallbeschichtung. Statt nebeneinander können die Schneidscheiben 25 in Vorschubrichtung gesehen hintereinander angeordnet sein.

Wie Fig. 1 zeigt, ist eine erste Fördervorrichtung 27 vorgesehen, um das Tonstrangstück 13 in praktisch horizontaler Richtung zwischen dem ersten Paar I von Abtrageinrichtungen 15,16 hindurchzuführen und die Nuten 9, 10 zu erzeugen. Mit einer zweiten Fördervorrichtung 29 kann das Tonstrangstück 13 in praktisch vertikaler Richtung zwischen dem zweiten Paar von Abtrageinrichtungen 17,18 hindurchgeführt werden, um die Nuten 11,12 zu erzeugen. Im gleichen Arbeitsgang wird auch das Tonstrangstück 13 durch eine Trennvorrichtung 31 mit Schneiddrähten in Formlinge 13' zerlegt. Die Formlinge 13' werden dann mit einer dritten Fördervorrichtung 33 auf das Förderband 35 verschoben. Dieses Förderband 35 kann mit der Fördervorrichtung 29 gekoppelt in der Höhe verfahrbar sein, so dass die Formlinge 13' etwa auf gleicher Höhe die Vorrichtung verlassen, auf der sie in die Vorrichtung eingetreten sind.

In der schematischen Zeichnung von Fig. 1 sind die bei der Bildung der Nuten 11 entstehenden Abfallstücke mit den Bezugsziffern 37,38,39,40 bezeichnet. Mit Ausnahme der Abfallstücke 38 von den Nuten 10 in der oberen Fläche des Tonstrangstücks 13 fallen alle Abfallstücke durch die Schwerkraft nach unten. Die Abfallstücke 38 von den Nuten 10 können z.B. pneumatisch mit Luftdüsen 42 weggeblasen oder mittels eines nicht eingezeichneten Greifers entfernt werden. Es können auch Ablenker 41 vorgesehen werden, welche die Abfallstücke 38 neben den Nuten 10 ablegen, worauf sie dann z.B. beim Transport mit der dritten Fördervorrichtung 35 z.B. durch eine Bürste oder pneumatisch von den Formlingen 13' abgestreift bzw. weggeblasen werden. Die herunterfallenden Abfallstücke 37-40 werden von einer Fördereinrichtung 44 aufgefangen und abtransportiert.

Zusammenfassend kann festgestellt werden, dass die Vorrichtung wie folgt arbeitet: Im ersten Arbeitsgang werden Nuten 9,10 aus der oberen und unteren Fläche des Tonstrangstücks 13 ausgehoben. Im zweiten Arbeitsgang werden Nuten 11,12 aus den einander gegenüberliegenden Seitenflächen des Tonstrangstücks 13 ausgehoben, wobei gleichzeitig das Tonstrangstück zur Bildung der Formlinge 13' geschnitten wird. Hierauf werden mit dem Förderband 35 die Formlinge 13' weggefördert.

## Patentansprüche

1. Verfahren zur Herstellung von angefasten Formlingen (13') aus einem Tonstrangstück (13), **dadurch gekennzeichnet, dass** die Anfasungen bzw. die Nuten (9,10,11,12), deren Wandungen nach dem Schneiden des Tonstrangs die Anfasung der Formlinge darstellen, durch Materialabtragung mittels Schneiden mit in V-Stellung zueinander angeordneten, drehbaren runden Schneidscheiben (25) gebildet werden.

2. Verfahren nach Anspruch 1, **dadurch gekennzeichnet, dass** in einem ersten Arbeitsgang Nuten (z.B. 9,10) aus einem ersten Paar voneinander gegenüberliegenden Flächen, z.B. die obere und untere Fläche, des Tonstrangstücks (13) ausgehoben werden, und dass in einem zweiten Arbeitsgang Nuten (z.B. 11,12) aus einem zweiten Paar voneinander gegenüberliegenden Flächen, z.B. den Seitenflächen, des Tonstrangstücks (13) ausgehoben werden.

3. Verfahren nach Anspruch 2, **dadurch gekennzeichnet, dass** das Schneiden des Tonstrangs zur Bildung von Formlingen (13') ebenfalls im zweiten Arbeitsgang erfolgt.

4. Verfahren nach einem der Ansprüche 1 bis 3, **dadurch gekennzeichnet, dass** beim Bilden von Nuten (10) in der oberen Fläche des Tonstrangstücks (13) entstehende Abfallstücke (38) pneumatisch mit Luftdüsen (42) weggeblasen werden.

5. Vorrichtung zur Herstellung von angefasten Formlingen (13') aus einem Tonstrangstück (13), mit Mitteln zur Bildung von Nuten(9-12) und einer Trennvorrichtung (31) zum Zerlegen des Tonstrangstücks (13) in Formlinge (13'), **dadurch gekennzeichnet, dass** zur Bildung von Nuten mindestens eine Abtrageinrichtung (15-18) mit mehreren Köpfen (23) zum Abtragen von Ton vorgesehen ist, wobei jeder Kopf (23) zwei in V-Stellung nebeneinander angeordnete, drehbare runde Schneidscheiben (25) aufweist.

6. Vorrichtung nach Anspruch 5, **dadurch gekennzeichnet, dass** für jede Seite des Tonstrangstücks (13) eine Abtrageinrichtung (15-18) mit mehreren Köpfen (23) vorgesehen ist und dass mindestens eine Fördereinrichtung (27,29,33) vorgesehen ist, um zum Ausheben der Nuten (9-12) eine Relativbewegung zwischen Abtrageinrichtung und Tonstrangstück in Richtung quer zum Tonstrangstück zu erzeugen.

7. Vorrichtung nach Anspruch 5 oder 6, **dadurch gekennzeichnet, dass** eine erste Fördervorrichtung (27) vorgesehen ist, um das Tonstrangstück (13) in praktisch horizontaler Richtung zwischen einem ersten Paar (I) von Abtrageinrichtungen (15,16) hindurchzuführen, dass eine zweite Fördereinrichtung (29) vorgesehen ist, um das Tonstrangstück (13) in praktisch vertikaler Richtung zwischen einem zweiten Paar (II) von Abtrageinrichtungen (17,18) hindurchzuführen und gegebenenfalls auch mittels einer Trennvorrichtung (31) in Formlinge (13') zu zerlegen.

8. Vorrichtung nach einem der Ansprüche 5 bis 7, **gekennzeichnet durch** wenigstens eine Luftdüse (42) zum pneumatischen Wegblasen von beim Bilden von Nuten (10) in der oberen Fläche des Tonstrangstücks (13) entstehenden Abfallstücken (38).

## Claims

1. A method for manufacturing chamfered briquettes (13') from an extruded clay element (13), **characterised in that** the chamfers or grooves (9, 10, 11, 12), whose walls represent the chamfering of the briquettes following the cutting of the clay extrusion, are formed by material removal by cutting using rotatable, round cutting disks (25) arranged in a V-position relative to one another.

2. A method according to claim 1, **characterised in that** in a first working step, grooves (e.g. 9, 10) are removed from a first pair of opposing surfaces, e.g. the upper and lower surfaces, of the extruded clay element (13), and in a second working step, grooves (e.g. 11, 12) are removed from a second pair of opposing surfaces, e.g. the lateral faces, of the extruded clay element (13).

3. A method according to claim 2, **characterised in that** the cutting of the clay extrusion to form briquettes (13') is also effected in the second working step.

4. A method according to one of claims 1 to 3, **characterised in that** waste (38) produced during the formation of grooves (10) in the upper surface of the extruded clay element (13) is blown away pneumatically by air nozzles (42).

5. A device for manufacturing chamfered briquettes (13') from an extruded clay element (13), with means for forming grooves (9-12) and a cutting device (31) for cutting the extruded clay element (13) into briquettes (13'), **characterised in that**, for the formation of the grooves, at lest one removal device (15-18) is provided having several heads for the removal of clay, each head having two rotatable, round cutting disks (25) arranged in a V-position relative to one another.

6. A device according to claim 5, **characterised in that**, for each side of the extruded clay element (13), a removal device (15-18) with a plurality of heads (23) is provided, and at least one conveying device (27, 29, 33) is provided for producing a relative movement between the removal device and the extruded clay element in the direction transverse to the extruded clay element in order to cut the grooves (9-12).

7. A device according to claim 5 or 6, **characterised in that** a first conveying device (27) is provided for guiding the extruded clay element (13) in a substantially horizontal direction through a first pair (I) of removal devices (15, 16), and a second conveying device (29) is provided for guiding the extruded clay element (13) in a substantially vertical direction through a second pair (II) of removal devices (17, 18) and optionally for cutting the extruded clay element (13) into briquettes (13') using a cutting device (31).

8. A device according to one of claims 5 to 7, **characterised by** at least one air nozzle (42) for pneumatically blowing away waste (38) produced during the formation of grooves (10) in the upper surface of the extruded clay element (13).

## Revendications

1. Procédé de réalisation de briquettes chanfreinées (13') à partir une ébauche d'argile (13), **caractérisé en ce que** les chanfreins ou les encoches (9, 10, 11, 12) dont les parois constituent le chanfrein des briquettes après le découpage de l'ébauche d'argile, sont formés par enlèvement de matière à l'aide d'une coupe avec des disques de coupe (25) circulaires rotatifs disposés en position de V les uns par rapport aux autres.

2. Procédé selon la revendication 1, **caractérisé en ce que** dans une première opération des encoches (par exemple 9, 10) sont creusées dans une première paire de surfaces opposées les unes aux autres, par exemple les surfaces supérieure et inférieure, de l'ébauche d'argile (13), et **en ce que** dans une deuxième opération des encoches (par exemple 11, 12) sont creusées dans une deuxième paire de surfaces opposées les unes aux autres, par exemple les faces latérales, de l'ébauche d'argile (13).

3. Procédé selon la revendication 2, **caractérisé en ce que** la découpe de l'ébauche d'argile pour former .des briquettes (13') est également effectuée pendant la deuxième opération.

4. Procédé selon l'une des revendications 1 à 3, **caractérisé en ce que** les déchets (38) obtenus lors de la formation des encoches (10) dans la face supérieure de l'ébauche d'argile (13) sont soufflés pneumatiquement à l'aide de buses d'air (42).

5. Dispositif pour la réalisation de briquettes chanfreinées(13') à partir d'une ébauche d'argile (13), comprenant des moyens pour former les encoches (9.12) et un dispositif de séparation (31) pour découper l'ébauche d'argile (13) en briquettes (13'), caractérisé an ce que pour la formation des encoches au moins un dispositif d'enlèvement (15-18) est prévue, comprenant plusieurs têtes (23) pour l'enlèvement d'argile, chaque tête (23) ayant deux disques de coupe (25) circulaires rotatifs, disposés l'un à côté de l'autre en position de V.

6. Dispositif selon la revendication 5, **caractérisé en ce que** pour chaque face de l'ébauche d'argile (13) un dispositif d'enlèvement (15-18) comprenant plusieurs têtes (23) est prévu, et **en ce qu'**au moins un dispositif de transport (27, 29, 33) est prévu pour générer un mouvement relatif entre le dispositif d'enlèvement et l'ébauche d'argile perpendiculairement à l'ébauche d'argile, en vue de creuser les encoches (9-12).

7. Dispositif selon la revendication 5 ou 6, **caractérisé en ce qu'**un premier dispositif de transport (27) est prévu pour faire passer l'ébauche d'argile (13) dans un sens pratiquement horizontal entre une première paire (I) de dispositifs d'enlèvement (15, 16), et **en ce qu'**un deuxième dispositif de transport (29) est prévu pour faire passer l'ébauche d'argile (13) dans un sens pratiquement vertical entre une deuxième paire (II) de dispositifs d'enlèvement (17, 18) et le cas échéant, pour la découper en briquettes (13') à l'aide d'un dispositif de séparation (31).

8. Dispositif selon l'une des revendications 5 à 7, **caractérisé par** au moins une buse d'air (42) pour le soufflage pneumatique de déchets (38) obtenus lors de la formation d'encoches (10) dans la face supérieure de l'ébauche d'arqile (13).
